# FASCICULE DE BREVET EUROPEEN

(11) **EP 3 365 900 B1**
(45) Date de publication et mention de la délivrance du brevet: **21.05.2025**
(21) Numéro de dépôt: 16809906.7
(22) Date de dépôt: 20.10.2016
(51) Int. Cl.: H01F 7/08, H01F 7/16, H02K 33/16, H01H 33/666

(54) **ACTIONNEUR LINÉAIRE À STABILITÉ MAGNÉTIQUE ET FORCE D'ARRACHEMENT AMÉLIORÉES**
LINEARAKTUATOR MIT VERBESSERTER MAGNETISCHER STABILITÄT UND ABSTREIFKRAFT
LINEAR ACTUATOR WITH IMPROVED MAGNETIC STABILITY AND STRIPPING FORCE

(30) Priorité: 20.10.2015 FR 1560004
(43) Date de publication de la demande: 29.08.2018
(73) Titulaire: Moving Magnet Technologies, 25000 Besançon (FR)
(72) Inventeur: LOUSSERT, Guillaume, 25000 Besançon (FR); RIOS-QUESADA, Javier, 25000 Besançon (FR); BIWERSI, Stéphane, 25140 Frambouhans (FR); DELBAERE, Michaël, 25720 Avanne (FR)
(74) Mandataire: IP Trust
(86) Numéro de dépôt international: PCT/FR2016/052707
(87) Numéro de publication internationale: WO 2017/068285

(56) Documents cités:
- WO-A1-2015/114261
- WO-A1-94/27303
- FR-A1- 2 308 178
- US-A1- 2006 049 701

## Description

### DOMAINE TECHNIQUE DE L'INVENTION

L'invention se rapporte à un actionneur électromagnétique linéaire présentant une ou deux positions stables sans énergie consommée, ces positions stables étant réalisées à l'aide d'au moins un aimant permanent. Plus particulièrement, l'invention propose un actionneur ayant la capacité de sortir de cette ou ces positions stables à l'aide de courant, on parlera de force d'arrachement, et ce de manière améliorée par rapport à l'état de l'art. L'invention propose aussi un actionneur ayant la capacité de réaliser des courses linéaires plus importantes que celles permises par rapport aux solutions de l'état de l'art ainsi qu'un gain sur la masse d'aimant utilisée à effort de stabilité donné.

**De** manière non limitative et à titre d'exemples, cet actionneur trouvera application pour tout type de vanne de circulation de fluide automobile, comme par exemple un actionneur pour soupape d'admission ou d'échappement d'air, ou bien encore pour déplacer un élément de transmission. Globalement, toute fonction nécessitant de maintenir une ou plusieurs positions stables sans courant, et de pouvoir sortir de cette position par ordre électrique, pourra trouver solution avec un actionneur comme décrit par l'invention.

### ETAT DE LA TECHNIQUE ANTERIEURE

On connait dans l'état de l'art des brevets d'actionneurs dont la ou les stabilités sont assurées par un ou plusieurs aimants.

Par exemple, le brevet US4779582 propose des topologies d'actionneurs pour déplacer des soupapes automobiles et qui utilisent notamment des aimants à la partie fixe (stator) qui participent activement au maintien des deux positions extrêmes de l'actionneur. Ces aimants sont positionnés entre deux bobines électriques disjointes afin de permettre le bouclage du flux magnétique autour de la première ou autour de la deuxième bobine.

Le même type de topologie d'actionneur peut être trouvé dans le document EP0157632 ou encore, plus récemment dans le document WO2014023326.

Ces dispositifs ont pour objet de résoudre le problème général d'assurer une mono ou bi-stabilité sans l'aide d'artifice mécanique, tels des ressorts, et ceci sans consommation d'énergie électrique grâce à l'emploi d'aimants permanents.

Cependant, ces dispositifs ne permettent pas d'assurer une sortie aisée des positions stables. En effet, des ressorts sont utilisés pour permettre la sortie, ou l'arrachement, plus aisée des positions stables. Un courant électrique dans la bobine, selon un sens de circulation privilégié, permet de favoriser l'arrachement mais n'annule pas complétement la force de maintien générée par les aimants ou ne permet pas une force d'arrachement suffisante pour vaincre les frottements éventuels ou une charge s'appliquant sur la partie mobile.

De plus, le fait d'utiliser deux bobines distinctes de part et d'autres de ces aimants en position centrale, rend l'actionneur peu efficace, la moitié du bobinage total n'étant pas magnétiquement active lorsque la partie mobile est à une extrémité ou à une autre de la course de l'actionneur.

On connait, de plus, dans le document WO2004066476, un autre type d'actionneur mono ou multi-stable permettant de garder ces positions de stabilité grâce à l'action d'un aimant porté par la partie mobile de l'actionneur.

Cet actionneur améliore en partie les actionneurs cités précédemment dans le sens où toute la bobine électrique participe à générer un effort et ce quelle que soit la position de la partie mobile sur la course. De plus, la topologie développée permet de générer un effort d'arrachement qui peut être maximisé en jouant sur l'encastrement des aimants à la partie mobile, guidé par les relations mathématiques exposées dans le document.

Par contre, cet actionneur présente une topologie originale qui impose un encombrement axial (dans la direction du déplacement) qui peut être important, d'autant plus lorsque la course demandée est grande. En effet, l'encombrement axial de l'actionneur sera au minimum égal à deux fois la course plus ce qui est nécessaire pour installer la bobine électrique et les pôles ferromagnétiques au stator, comme on peut l'apprécier en figure 6 de ce document. De plus, on peut éventuellement critiquer le fait de déplacer des aimants qui vont subir des accélérations importantes dues aux chocs lors de l'accostage de la partie mobile dans les positions extrêmes, pouvant pénaliser, à terme, la durée de vie du système.

Enfin, on connait par ailleurs une topologie d'actionneur pouvant avoir un caractère bistable où les aimants sont fixes dans la structure magnétique, ne nécessitant qu'une seule bobine électrique pour le fonctionnement dans les deux sens d'actionnement, et où la partie mobile est seulement constituée d'une pièce ferromagnétique, comme décrit dans les demandes WO9427303 ou WO2015114261. Ces topologies ne bénéficiant pas, de par leur nature, d'une force d'arrachement très importante, des indications sommaires sont données pour permettre une augmentation de cette force grâce à l'utilisation de cornes polaires.

Si ce type de structures permet de régler en partie les problèmes cités ci-dessus (par l'utilisation d'aimant fixe et utilisation de cornes polaires), aucun enseignement précis n'est donné quant à l'utilisation des cornes polaires. De plus, les règles dimensionnelles données dans ces documents et particulièrement le document EP0713604 destinent cet actionneur, comme indiqué dans son préambule, à des courses de faibles amplitudes, de l'ordre de +/- 1 millimètres.

De plus, le document US20060049701 décrit un actionneur linéaire capable de propager la force magnétique d'un aimant de stator à l'intérieur d'une culasse d'une manière régulière de manière à former un chemin magnétique supérieur. Un actionneur linéaire est pourvu d'une partie mobile faisant face à un aimant de stator muni d'une bobine dans une culasse, les deux pièces polaires magnétiques de la culasse étant sorties respectivement vers un pôle S et un pôle N par commutation de l'excitation de la bobine de manière soumettre la partie mobile à une poussée et provoquer un entraînement réciproque.

Il existe donc un besoin, non résolu par l'art antérieur, relatif à la réalisation d'un actionneur présentant une course de plusieurs millimètres et pouvant aller jusqu'à, typiquement, 15 à 20 millimètres, en minimisant la masse d'aimant, en favorisant une force d'arrachement purement magnétique suffisante à vaincre la force de maintien stable, les frottements et les charges extérieures éventuelles s'appliquant au mobile de l'actionneur, et en favorisant une force d'actionnement conséquente sur la course de l'actionneur.

### EXPOSE DE L'INVENTION

La présente invention vise donc à pallier les inconvénients de l'état de la technique en proposant un actionneur présentant au moins une position stable sans courant et pouvant être réalisé sur des courses de plusieurs millimètres tout en bénéficiant d'une force d'arrachement améliorée et en conservant un encombrement axial limité.

Un autre objet de l'invention est de permettre de réduire la masse d'aimant par rapport aux réalisations de l'art antérieur pour atteindre un effort de stabilité donné.

Pour ce faire, la présente invention propose en premier lieu, en rupture avec les enseignements de l'art antérieur et du document EP0713604 particulièrement, de donner des dimensions relatives forts différentes entre la hauteur de la masse mobile et la hauteur de l'aimant. De ce fait, l'homme du métier ne serait pas conduit à s'écarter des rapports dimensionnels préconisés par ce document.

En second lieu, l'utilisation de cornes polaires est astucieusement mise en œuvre en donnant une proximité de ces cornes avec l'aimant de l'actionneur d'une part et la masse mobile en position stable d'autre part.

En troisième lieu, et de manière toute aussi surprenante pour l'homme de métier, l'utilisation d'une cale magnétique fixe à placer entre l'aimant et la bobine de l'actionneur, la cale ayant une hauteur sensiblement égale à celle de la bobine, permet d'améliorer les efforts de stabilité de l'actionneur sans pénaliser la force d'arrachement générée grâce à la bobine électrique.

Plus particulièrement, l'invention propose un actionneur électromagnétique linéaire selon la revendication 1.

On entend par « course » au sens du présent brevet la longueur du déplacement selon l'axe A de l'armature mobile entre deux butées axiales délimitant le déplacement de l'armature mobile. Ces butées peuvent être mécaniques, et réalisent une fonction magnétique pour un actionneur bistable, ou amagnétique pour l'une des butées et magnétique pour l'autre butée, pour un actionneur monostable.

Pour améliorer sensiblement la force d'arrachement et particulièrement pour des grandes courses de plusieurs millimètres, l'actionneur présente deux cornes polaires solidaires de la culasse, positionnées de part et d'autre de l'aimant et s'étendant axialement vers l'aimant sur des hauteurs respectives Hph, Hpb.

Avantageusement, Hpb est voisin de c et Hpb ≥ Hph.

Pour économiser le volume d'aimant tout en bénéficiant d'efforts améliorés, tant sur la force d'arrachement que sur la force de stabilité magnétique l'actionneur comporte une cale en matière ferromagnétique douce intercalée, transversalement entre l'aimant permanent et la bobine électrique.

Cette cale ferromagnétique présente une longueur selon la direction A qui peut être voisine de la longueur Ha de l'aimant permanent mais elle sera préférentiellement d'une longueur voisine de la hauteur de la bobine électrique de façon à venir jusqu'au voisinage de la culasse.

De manière générique, l'actionneur peut présenter une ou deux positions stables.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- les figures 1a et 1b, respectivement une vue en perspective entière et une vue tronquée d'un actionneur bistable selon un mode de réalisation typique semblable au deuxième mode de réalisation;
- les figures 2a et 2b, deux vues suivant un plan de coupe axial d'un actionneur bistable selon l'invention dans un premier mode de réalisation, respectivement dans une et l'autre des positions d'extrémité de course ;
- la figure 3, une vue suivant un plan de coupe axial d'un actionneur bistable selon l'invention dans un deuxième mode de réalisation ;
- la figure 4, une vue suivant un plan de coupe axial d'un actionneur bistable selon l'invention dans un troisième mode de réalisation ;
- la figure 5, un graphique présentant l'effort typique généré par un actionneur bistable selon l'invention sur une course linéaire donnée ;
- les figure 6a et 6b, deux vues suivant, respectivement une perspective et un plan de coupe axial d'un actionneur monostable selon l'invention ;
- la figure 7, une vue suivant un plan de coupe axial d'un actionneur bistable selon l'invention dans un quatrième mode de réalisation ;
- la figure 8, une vue suivant un plan de coupe axial d'un actionneur bistable selon l'invention dans un mode alternatif ;
- la figure 9, un graphique présentant l'influence de l'épaisseur des cornes polaires ;
- la figure 10 un graphique présentant l'influence des hauteurs de cornes polaires ;
- la figure 11 un graphique présentant l'importance de la relation entre hauteur d'aimant, la course et la hauteur de l'armature mobile ;
- la figure 12 un graphique présentant l'évolution typique des efforts pour un actionneur présentant une dissymétrie comme présenté en figures 6a et 6b ;
- la figure 13 un graphique présentant l'intérêt d'une réalisation selon le troisième mode de la figure 4 ;
- la figure 14 un mode de réalisation alternatif qui utilise les cales magnétiques sans corne polaire.

### DESCRIPTION DETAILLEE D'UN MODE DE REALISATION

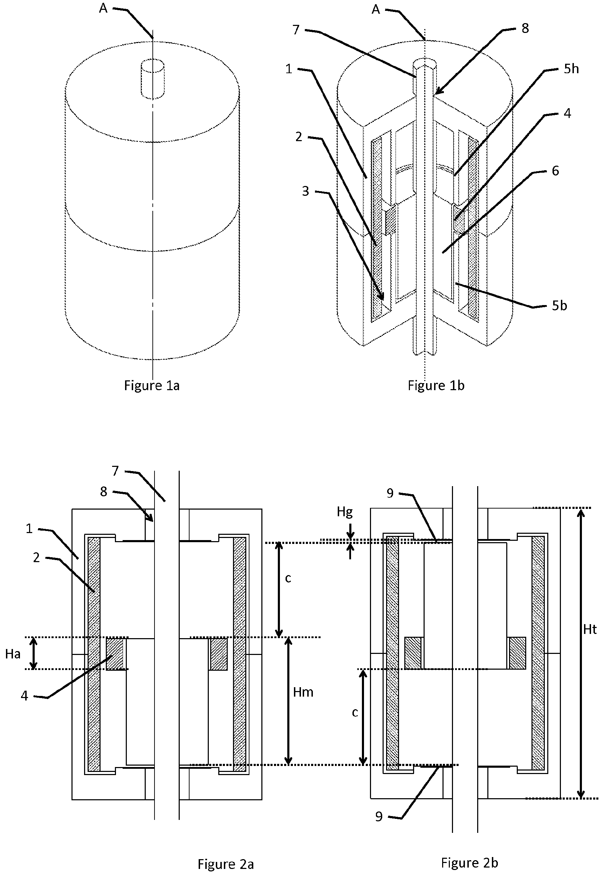

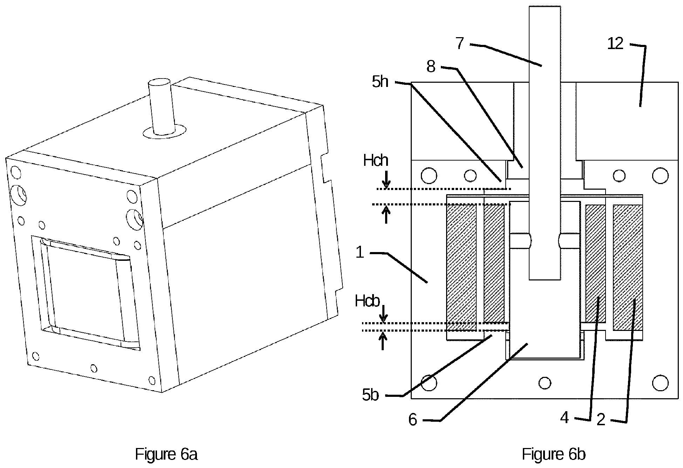

La figure 1a présente une vue en perspective d'un actionneur selon un mode particulier de l'invention. Dans un mode général de réalisation, la forme préférée présente une axisymétrie autour de l'axe (A) et l'actionneur présente une forme tubulaire. L'invention n'est cependant pas limitée à une réalisation sous cette forme axisymétrique puisqu'une réalisation sous une forme parallélépipédique est aussi possible comme montrée en figures 6a et 6b. De même, si sur les figures, la culasse (1) semble être réalisée en deux parties, ce n'est qu'un exemple de réalisation non limitatif de la manière de réaliser cette culasse (1) extérieure.

La vue tronquée en figure 1b, où un quart de l'actionneur a été supprimé pour mieux apprécier le détail de réalisation, présente tous les éléments constitutifs de l'actionneur dans un mode préféré. On trouve donc au stator, regroupant les parties fixes de l'actionneur, une culasse (1) en un matériau ferromagnétique doux, cette culasse présentant ici une forme extérieure cylindrique, une bobine électrique (2) logée à l'intérieur d'une cavité (3) formée dans la culasse (1), ainsi qu'un aimant permanent (4) positionné, axialement, au centre de la culasse (1). Il peut être envisagé de positionner l'aimant non pas au centre mais en décalage axial afin de favoriser une dissymétrie de fonctionnement de l'actionneur dans un sens ou l'autre de déplacement. Dans ce mode préféré, la culasse (1) est prolongée axialement, à l'intérieur du volume défini par la bobine électrique (2), par des cornes polaires (5b, 5h) qui viennent au voisinage de l'aimant (4). La partie mobile en translation suivant la direction axiale relativement au stator, est composée d'une armature (6) tubulaire en matériau ferromagnétique doux qui se déplace à l'intérieur du volume défini par l'aimant (4) et les cornes polaires (5b, 5h). Cette armature (6) est solidaire d'un arbre (7) qui coulisse dans un palier (8) solidaire de la culasse (1) et qui sert à solidariser un organe extérieur (non visible) à déplacer par l'actionneur.

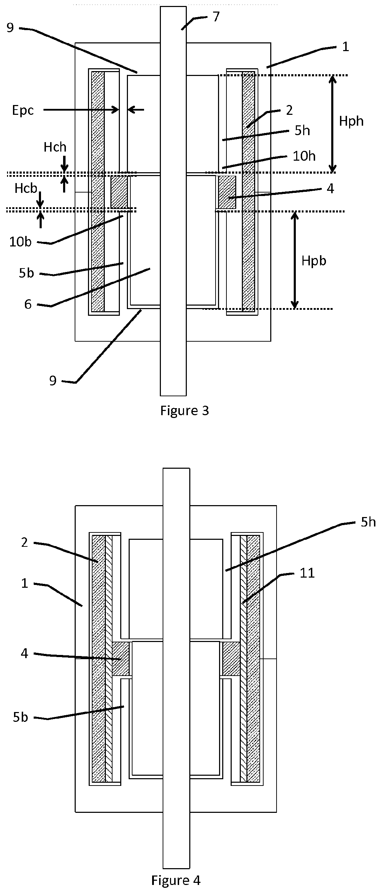

L'utilisation des cornes polaires (5b, 5h) n'est en premier lieu pas nécessaire pour l'invention générale, comme on le retrouve dans les vues des figures 2a et 2b. En effet, dans ce premier mode de réalisation d'un actionneur bistable ainsi présenté dans ces vues, on apprécie surtout les dimensions données aux différents éléments constitutifs de l'actionneur permettant de lui conférer la possibilité de réaliser des courses linéaires supérieures à ce qu'il est possible avec les réalisations de l'état de l'art. Ainsi, en notant, Ha, la hauteur axiale de l'aimant (4), Hm la hauteur axiale de l'armature mobile (6), c la course de l'actionneur, on peut apprécier le fait que Hm est telle que Hm = Ha + c. Cette règle dimensionnelle générale, qui peut s'apprécier même lorsque l'égalité n'est pas strictement respectée, permet de réaliser un actionneur ayant une course c bien supérieure à Ha. Et la hauteur Ht de l'actionneur est ainsi à peine plus importante que 2 x c + Ha, c'est-à-dire en ajoutant l'épaisseur des butées axiales (9) formées dans un matériau ferromagnétique doux solidaire de la culasse (1). Une conséquence de ce dimensionnement est le fait que, axialement, les extrémités de l'aimant (4) se retrouvent alignées, ou au voisinage, avec les extrémités de l'armature (6) lorsque cette dernière est dans ses positions extrêmes. C'est une caractéristique qui est mise à profit dans le deuxième mode de réalisation en figure 3.

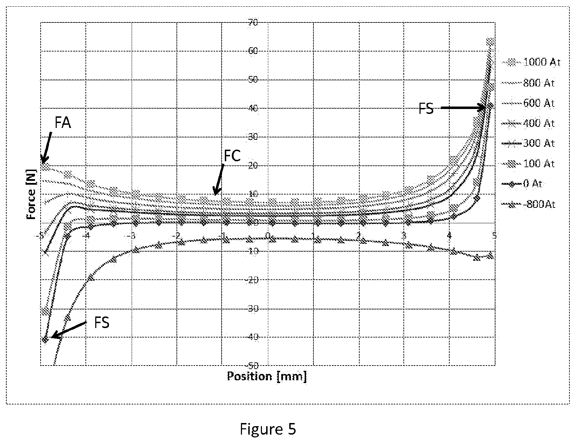

Il est à noter que l'armature (6) peut soit venir en contact avec ces butées axiales (9), soit venir en contact avec des butées extérieures (non montrées), soit venir en contact sur un élément amagnétique (non montré) intercalé entre les butées (9) et l'armature (6). Il est en effet aussi dans l'objet de l'invention que de permettre avantageusement l'existence d'un entrefer résiduel de hauteur axial Hg dont l'intérêt peut être apprécié sur la figure 5. En effet, un entrefer résiduel permettra de se positionner en un point de la course où la force d'arrachement et la force de stabilité magnétique sont optimisées selon les nécessités d'un cahier des charges donné.

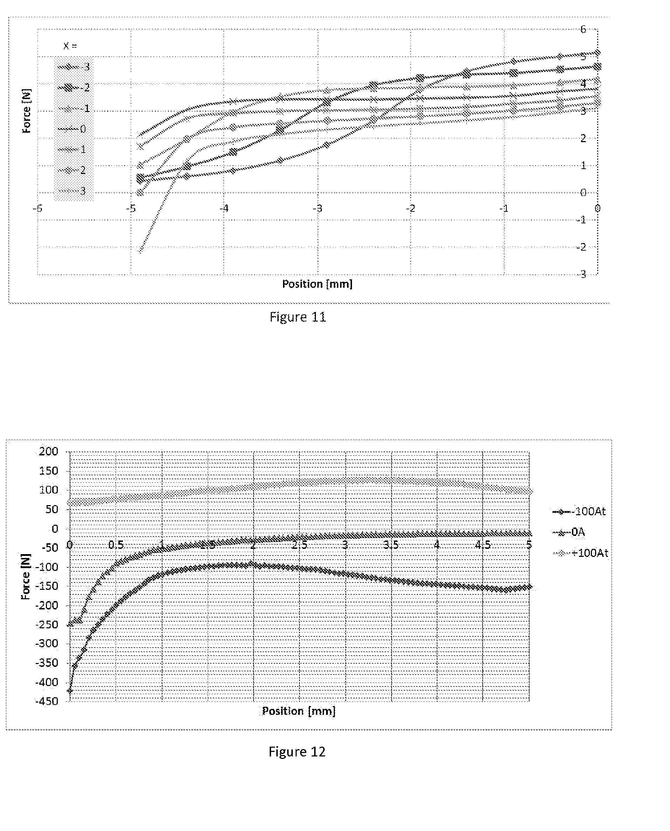

La figure 11 permet d'apprécier le caractère important de la relation Hm=Ha+c. En effet, le graphique représenté montre l'évolution du facteur x tel que x=Hm-(Ha+c). L'optimum de force d'arrachement proche de la position -5 mm, dans cet exemple, est clairement visible lorsque x=0, et une chute significative de cet optimum est observée lorsque x devient franchement négatif ou positif. Il a été observé que, généralement suivant les cas considérés, l'optimum de force d'arrachement est observé lorsque Hm est tel que 0.9 * (Ha+c) < Hm < 1.1 * (Ha+c). En s'écartant de cette gamme, la diminution de la force d'arrachement s'avère importante.

La figure 3 présente un deuxième mode de réalisation, similaire au mode préféré et présenté en figure 1 où l'on retrouve les éléments des figures 2a et 2b ainsi que les cornes polaires (5b, 5h) décrits en figure 1b. Ces cornes polaires (5b, 5h) sont ici symétriquement disposées, axialement, par rapport au plan médian de l'actionneur perpendiculairement à l'axe de l'actionneur. Ces cornes polaires (5b, 5h) présentent une épaisseur Epc, constante dans l'exemple de réalisation décrit ici, dont la valeur permet d'optimiser la courbe de force. Les cornes polaires (5h, 5b) s'étendent axialement, suivant une hauteur, respectivement Hph, Hpb, de manière à ce que leurs extrémités (10h, 10b) soient proches de l'aimant. Ce faisant, il existe aussi, dans l'une et l'autre des deux positions de stabilité de cet actionneur, une proximité entre l'une des extrémités (10a, 10b) et l'une des extrémités de l'armature (6). Les distances Hch et Hcb qui existent entre les extrémités axiales (10h, 10b) des cornes polaires (5b, 5h) et les extrémités axiales de l'aimant (4) peuvent être égales si l'on souhaite conférer un comportement symétrique à l'actionneur, c'est-à-dire sa capacité à avoir le même type de réponse en force lorsque l'on actionne depuis l'une des extrémités de course vers l'autre ou vice-versa. Il est possible de donner des valeurs différentes entre Hcb et Hch si l'on souhaite conférer un caractère asymétrique à l'actionneur (réponse en force différente entre un sens de déplacement et l'autre) ou si l'on souhaite réaliser un actionneur monostable, par exemple comme décrit en figures 6a et 6b. Il est enfin possible de n'intégrer qu'une seule de ces 2 cornes, et de réaliser des cornes qui ne s'étendent pas sur 360°, mais sur un angle inférieur, lorsque la culasse (1) est axisymétrique. Cette dernière modification permet notamment d'ajuster au besoin les efforts générés.

L'utilisation des cornes polaires (5b, 5h) sera particulièrement recherchée si le besoin en force d'arrachement est important, ce qui est notamment le cas plus la course de l'actionneur augmente. En effet, par un effet de synergie magnétique entre l'armature (6) et les deux cornes polaires (5b, 5h), il est généré un effort d'arrachement important et le travail mécanique qui est globalement produit sur la course augmente significativement.

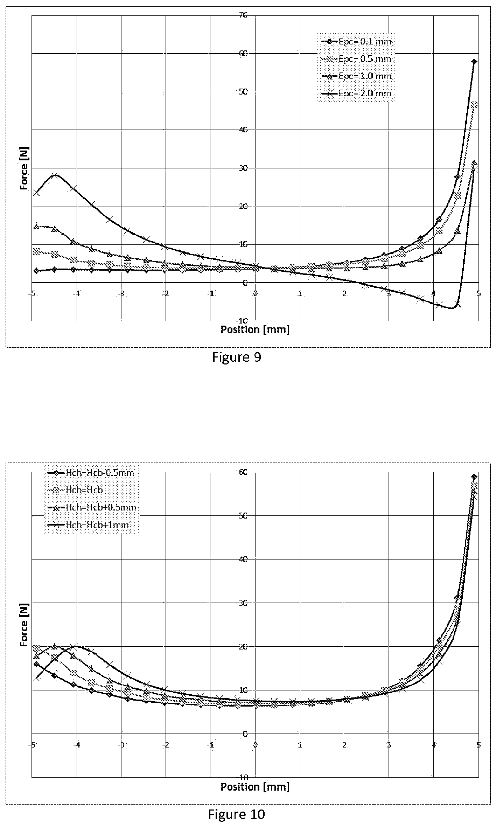

Pour tous les modes de réalisation utilisant ces cornes polaires (5b, 5h), il est important de garder les valeurs Hch et Hcb relativement faibles par rapport à la course c. Nous explicitons ici le fonctionnement de ces cornes polaires (5b, 5h) sur le cas d'exemple de la figure 3 où l'armature (6) est dans sa position de stabilité inférieure. Sous l'action du courant électrique, le flux magnétique crée par la bobine (2) va transiter par la corne polaire inférieure (5b) et passer par l'armature (6) de sorte que, durant tout le mouvement sur la course, la hauteur Hph, Hpb étant voisine de la course c, ce passage de flux magnétique sera conservé. L'épaisseur Epc relativement fine par rapport à l'épaisseur radiale de l'armature (6) va assurer que le flux magnétique vient bien transiter par l'armature et non retourner trop rapidement à la culasse (1). La corne inférieure (5b) devra donc avantageusement être de sorte à ce que Hpb soit sensiblement égal à c, c'est-à-dire à ce que Hcb soit de faible valeur par rapport à c ou Hm. La corne supérieure (5h) va jouer un rôle d'attracteur favorisant l'arrachement de la position de stabilité par un effet de réluctance variable locale entre l'armature (6) et la corne supérieure (5h). Afin de régler cet effort d'arrachement, on pourra suivre par exemple l'influence de Hch sur la courbe de force telle que présentée en figure 9. L'épaisseur Epc est aussi donnée de manière à ce que l'effort d'arrachement puis l'effort sur la course soit sculptée suivant le cahier des charges donné. Pour ce faire, les enseignements de la figure 10 pourront être utilisés en guise de guide général.

De manière générique, il faut donc que :
- la corne polaire (5b) en regard de l'armature (6) dans sa position de stabilité magnétique soit telle que Hcb soit faible en regard de c ou Hm, c'est-à-dire Hpb voisin de c,
- la corne polaire (5b) opposée à l'armature (6) soit telle que Hcb ≤ Hch, l'augmentation de Hch permettant de conférer une allure de force sculptée pour favoriser par exemple, l'emploi d'un entrefer résiduel Hg afin de régler la force de stabilité magnétique, la force d'arrachement et la force sur la course,
- les épaisseurs de cornes polaires soient faibles et non forcément constantes par rapport à l'épaisseur radiale de l'armature (6).

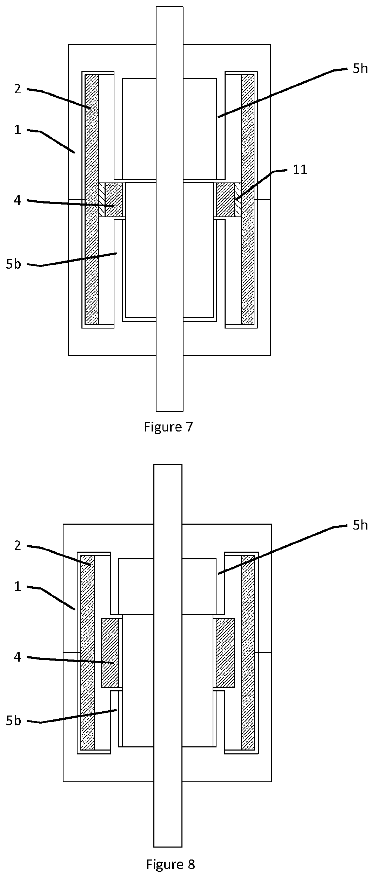

Afin d'améliorer l'effort de stabilité magnétique sans courant, il peut être avantageux de positionner une cale magnétique (11), en matériau ferromagnétique doux, radialement positionnée entre l'aimant (4) et la bobine (2). Cette cale (11) peut avoir une hauteur axiale similaire à celle de l'aimant (4) comme illustrée en figure 7, ou préférentiellement, une hauteur similaire à celle de la bobine, de manière à favoriser le passage de flux magnétique entre l'aimant (4) et la culasse (1) comme présenté en figure 4. Afin de ne pas favoriser une trop grande perméance magnétique de la bobine (2), et court-circuiter ainsi une partie du flux utile entre aimant (4) et bobine (2), il est intéressant d'optimiser l'épaisseur de cette cale (11) en favorisant sa saturation magnétique.

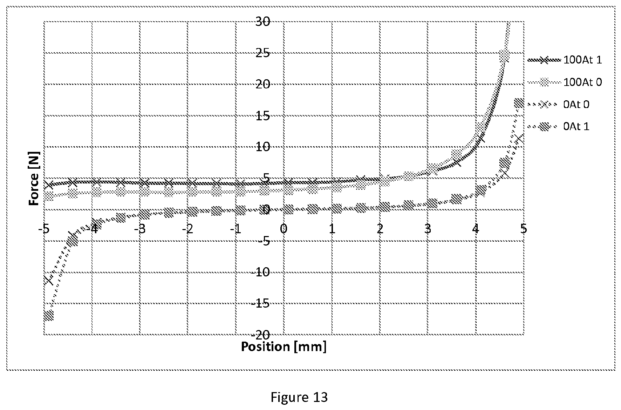

Cette cale (11) permet de diminuer l'épaisseur d'aimant (4) en gardant des propriétés mécaniques identiques (effort généré sans et avec courant). Au final, il est possible d'obtenir un actionneur ayant le même volume total et le même volume de bobine électrique (2), soit en considérant un aimant (4) d'une épaisseur transverse donnée, soit en considérant un aimant (4) et une cale (11) ayant, l'un avec l'autre, une épaisseur transverse équivalente. Une économie sur le volume d'aimant peut ainsi être éventuellement réalisée. Cette propriété intéressante et surprenante est illustrée par la figure 13 où l'on voit l'évolution des courbes de force sans et avec courant (respectivement 0At et 100At) pour deux actionneurs différents ne présentant pas de cale ou présentant une cale derrière l'aimant (respectivement cas « 0 » et « 1 »). Pour le cas « 0 », l'aimant (4) présente une épaisseur de 2.5 mm et dans le cas « 1 » l'aimant (4) présente une épaisseur de 2 mm et la cale une épaisseur de 0.5 mm, soit une épaisseur cumulée semblable à celle du cas « 0 ». Que ce soit avec ou sans courant, les forces d'arrachement et de stabilité magnétique sont améliorées (effet renforcé) pour le cas « 1 » relativement au cas « 0 » alors que la masse d'aimant a été réduite. Il conviendra, en fonction du dimensionnement considéré et des forces magnétomotrices en présence et de la section du circuit magnétique, de régler l'épaisseur relative de la cale (11) et de l'aimant (4) pour bénéficier de l'optimum de cet effet.

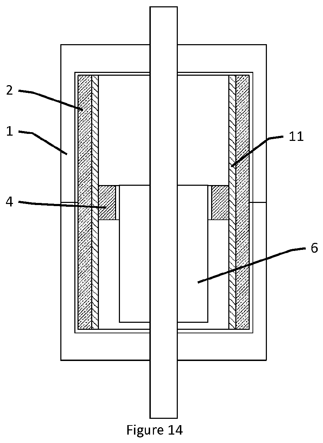

Cette cale (11) peut être utilisée en conjonction avec les cornes polaires (5h, 5b) comme illustré en figures 4 et 7 ou sans cornes comme illustré en figure 14.

Une réalisation parallélépipédique d'un actionneur monostable est présentée en figures 6a et 6b. Les caractéristiques notables sont ici la dissymétrie de l'actionneur qui ne présente pas une réponse en force identique sur les deux sens d'actionnement, ceci grâce à un travail particulier sur les cornes polaires (5b, 5h). Sur la partie inférieure, la distance Hcb est minimisée afin de favoriser la proximité entre l'aimant (4) et la corne polaire inférieure (5b), suivant les enseignements présentés en figure 3. La distance Hch est supérieure à la distance Hcb afin d'obtenir une force avec courant qui augmente après la force d'arrachement, comme explicité sur la figure 10. Cet actionneur présente de plus, une butée amagnétique qui sert aussi de palier (8), sur la partie supérieure de l'actionneur de manière à ce que l'armature (6) vienne en butée sur cet élément et qu'il n'y ait aucun effort de stabilité lorsque l'armature (6) est en position haute. Le support de cette butée (8) est ici symbolisé par un flasque amagnétique (12). Le retour en position basse peut indifféremment être réalisé par action du courant dans la bobine (2), de la gravité ou d'une charge extérieure quelconque. La figure 12 illustre le comportement typique d'un tel actionneur selon le sens du courant appliqué où l'on voit que la courbe de force à +100At n'est pas symétrique avec celle à -100At et que la courbe sans courant appliqué ne présente pas de symétrie par rapport au centre de la course.

De manière générale, la force d'arrachement et la force sur la course seront améliorées en augmentant la hauteur Ha de l'aimant. Par exemple, la figure 8 présente une telle réalisation où les forces avec courant seront améliorées par rapport à la réalisation de la figure 3 mais où la course c sera diminuée si l'on souhaite garder une hauteur Ht similaire. Cette augmentation de la masse d'aimant n'est cependant pas indispensable au bon fonctionnement de l'actionneur et il est dans l'objet de l'invention que de permettre un fonctionnement viable avec une hauteur Ha sensiblement inférieure à la course c et à la hauteur Hm de l'armature (6).

Les figures 5, 9 et 10 présentent, au travers d'exemples, les avantages et enseignements généraux conférés par un actionneur objet de l'invention.

En figure 5, nous présentons, dans le cadre d'un actionneur bistable, l'évolution de l'effort sur la course de l'actionneur en fonction du nombre d'ampères-tours circulant dans la bobine (2) lorsque les critères dimensionnels de la figure 3 sont respectés et les cornes polaires (5b, 5h) sont utilisées. Ici, nous prenons le cas Hch = hcb = 0.5mm, et Ha+c=Hm, avec Ha=10mm, pour une course c de +/-5 mm soit 10 mm. Sur ce graphique, FS dénote la force de stabilité magnétique, symétrique des deux côtés, FA dénote la force d'arrachement, permettant de sortir de la position stable avec une force non négligeable, FC dénote la force sur la course, éventuellement nécessaire si l'actionneur doit vaincre une charge (frottement, force de réaction, force d'un gaz,...) sur l'entière course. L'épaisseur des cornes polaires est de l'ordre de 1 à 1.5 mm, soit faible en regard de la largeur de l'armature (6). On remarque que le sens du courant est bien sûr important puisqu'un courant positif a pour conséquence une force globalement positive permettant l'arrachement, suivant le niveau injecté, lorsque l'armature est en position -5 mm, alors qu'un courant négatif renforcera la force de stabilité en cette même position. A l'opposé, lorsqu'en position +5 mm, c'est le courant négatif qui permettra de sortir de la position de stabilité.

La figure 9 donne à ce propos des orientations quant au dimensionnement de l'épaisseur Epc. Comme explicité plus haut, l'épaisseur doit rester optimisée en fonction du cahier des charges que l'on se fixe. On voit, dans cet exemple similaire au cas d'exemple de la figure 5, que l'augmentation trop importante de la valeur Epc, conduit certes à la maximisation de la force d'arrachement, mais aussi à une diminution très importante de la force sur la deuxième partie de la course, la force passant même dans des valeurs négatives, de sorte que l'actionnement, en cas de fortes charges extérieures, n'est pas assuré. Il conviendra ainsi d'optimiser la valeur d'Epc en restant faible relativement à la course et surtout aussi aux sections des matériaux magnétiques en présence. Le recours à une épaisseur Epc non constante permettra d'atteindre des compromis intéressants en jouant sur la saturation magnétique en fonction de la position.

La figure 10 donne elle des indications quant à la valeur de Hch à donner pour obtenir des performances optimales en fonction du cahier des charges dans le cas où Hcb=0.5mm et où Hm=Ha+c+0.5 de manière à ce que l'extrémité de l'armature (6) est alignée axialement avec l'extrémité de la corne polaire (5h) lorsque Hch=Hcb. Ce cas d'étude correspond à un cas similaire aux cas présentés en figures 5 et 9 mais nous voyons ici que l'augmentation de Hch relativement à Hcb permet de décaler les courbes de force d'arrachement et de force sur la course. Si l'on veut privilégier la force d'arrachement, une valeur voisine de Hch=Hcb sera à privilégier. Si l'on veut bénéficier d'un effort croissant en début de course, il faudra privilégier une hauteur Hch supérieure à Hcb, c'est-à-dire créer un décalage axial entre l'extrémité de la corne polaire d'attraction et l'extrémité de l'armature (6). Il est à noter que les variations de Hch et Hcb n'ont qu'un effet négligeable sur la force de stabilité de sorte que ces paramètres peuvent être optimisés indépendamment les uns et des autres.

## Revendications

1. Actionneur électromagnétique linéaire présentant un axe de symétrie A et une course c, au moins une position stable dans une des extrémités de la course et comportant une armature (6) réalisée en un matériau magnétique doux, ladite armature (6) étant mobile selon l'axe A et ayant une longueur Hm selon l'axe A, ladite armature (6) présentant une forme symétrique à l'axe A, et une culasse (1) statorique fixe réalisée en un matériau magnétique doux et supportant au moins une bobine électrique (2), ledit actionneur comportant en outre au moins un aimant (4) permanent fixe aimanté selon un axe transversal perpendiculaire à la direction A, l'aimant (4) étant placé transversalement entre l'armature (6) mobile et la bobine électrique (2), l'aimant (4) ayant une longueur Ha selon la direction A, la culasse (1) fixe et l'armature (6) mobile définissant entre elles au moins un entrefer résiduel axial (Hg), Ha+c étant de l'ordre de grandeur de Hm, la longueur Hm étant telle que 0.9 x * (Ha+c) < Hm < 1.1 x * (Ha+c), l'actionneur présentant deux cornes polaires (5h, 5b) solidaires de la culasse (1), positionnées transversalement entre l'armature (6) mobile et la bobine électrique (2) et verticalement de part et d'autre de l'aimant (4) et s'étendant axialement vers l'aimant (4) sur des hauteurs respectives Hph, Hpb.

2. Actionneur électromagnétique selon la revendication 1 **caractérisé en ce qu'**il comporte une cale (11) en matière ferromagnétique douce intercalée, transversalement entre l'aimant (4) permanent et la bobine électrique (2).

## Patentansprüche

1. Linearer elektromagnetischer Aktuator, der eine Symmetrieachse A und einen Hub c, mindestens eine stabile Position an einem der Enden des Hubs aufweist, und umfassend einen Anker (6), der aus einem weichmagnetischen Material gefertigt ist, wobei der Anker (6) entlang der Achse A beweglich ist und eine Länge Hm entlang der Achse A vorweist, wobei der Anker (6) eine Form, die zu der Achse A symmetrisch ist, und ein festes Statorjoch (1), das aus einem weichmagnetischen Material gefertigt ist und mindestens eine elektrische Spule (2) trägt, aufweist, der Aktuator ferner umfassend mindestens einen festen Dauermagneten (4), der entlang einer Querachse senkrecht zu der Richtung A magnetisiert ist, wobei der Magnet (4) zwischen dem beweglichen Anker (6) und der elektrischen Spule (2) quer angeordnet ist, wobei der Magnet (4) eine Länge Ha entlang der Richtung A vorweist, wobei das feste Joch (1) und der bewegliche Anker (6) zwischen sich mindestens einen verbleibenden axialen Luftspalt (Hg) definieren, wobei Ha+c in der Größenordnung von Hm liegt, wobei die Länge Hm so ist, dass 0,9 * (Ha+c) < Hm < 1,1 * (Ha+c), wobei der Aktuator zwei Polhörner (5h, 5b) aufweist, die mit dem Joch (1) fest verbunden sind, die zwischen dem beweglichen Anker (6) und der elektrischen Spule (2) quer und zu beiden Seiten des Magneten (4) vertikal positioniert sind und sich zu dem Magneten (4) hin über jeweilige Höhen Hph, Hpb axial erstrecken.

2. Elektromagnetischer Aktuator nach Anspruch 1,
**dadurch gekennzeichnet, dass** er einen Keil (11) aus weichem ferromagnetischem Material, der zwischen dem Dauermagneten (4) und der elektrischen Spule (2) quer eingefügt ist, umfasst.

## Claims

1. Linear electromagnetic actuator having an axis of symmetry A and a stroke c, at least one stable position in one of the ends of the stroke, and comprising an armature (6) made of a soft magnetic material, said armature (6) being movable along the axis A and having a length Hm along the axis A, said armature (6) having a shape symmetrical to the axis A, and a fixed stator yoke (1) made of a soft magnetic material and supporting at least one electric coil (2), said actuator further comprising at least one fixed permanent magnet (4) magnetized along a transverse axis perpendicular to direction A, the magnet (4) being placed transversely between the moving armature (6) and the electric coil (2), the magnet (4) having a length Ha along direction A, the fixed yoke (1) and the moving armature (6) defining therebetween at least one axial residual air gap (Hg), Ha+c being of the order of magnitude Hm, the length Hm being such that 0.9 * (Ha+c) < Hm < 1.1 * (Ha+c), the actuator having two polar tips (5h, 5b) secured to the yoke (1), which are positioned transversely between the moving armature (6) and the electric coil (2) and vertically on either side of the magnet (4), and which extend axially toward the magnet (4) over respective heights Hph, Hpb.

2. Electromagnetic actuator according to claim 1, **characterized in that** it comprises a shim (11) made of soft ferromagnetic material inserted transversely between the permanent magnet (4) and the electric coil (2).
